# EUROPÄISCHE PATENTSCHRIFT

(11) **EP 3 346 128 B1**
(45) Veröffentlichungstag und Bekanntmachung des Hinweises auf die Patenterteilung: **04.08.2021**
(21) Anmeldenummer: 18000011.9
(22) Anmeldetag: 05.01.2018
(51) Int. Cl.: F04B 39/08, F04B 41/00, F04B 49/10, F04B 49/22, F04B 49/24, F24F 11/30

(54) **KOMPRESSORANLAGE**
COMPRESSOR INSTALLATION
INSTALLATION DE COMPRESSEUR

(30) Priorität: 10.01.2017 DE 202017000121 U
(43) Veröffentlichungstag der Anmeldung: 11.07.2018
(73) Patentinhaber: Bauer Kompressoren GmbH, 81477 München (DE)
(72) Erfinder: Kampfl, Robert, 81245 München (DE)
(74) Vertreter: Hering, Hartmut

(56) Entgegenhaltungen:
- DE-A1- 2 408 378
- DE-U1-202009 008 103
- DE-U1-202013 005 806
- US-A1- 2009 084 194

## Beschreibung

Die Erfindung bezieht sich auf eine Kompressoranlage mit einem Kompressor, dessen Druckgasausgang mit einem Verbraucher verbunden ist und über eine Bypassleitung über einen Druckminderer mit einer Gasmesseinrichtung verbunden ist, welche Konzentrationen von Gasbestandteilen, wie O₂, CO, CO₂, NO₂, Feuchte (H₂O), VOC, erfasst.

Kompressoranlagen, insbesondere Hochdruckkompressoranlagen der vorstehend genannten Art sind an sich bekannt, siehe beispielsweise DE 20 2013 005 806 U1, oder DE 20 2009 008 103 U1.

Die Erfindung zielt darauf ab, zuverlässig und auf möglichst konstruktiv einfache Weise zu vermeiden, dass Druckgas mit einer unzulässigen Konzentration wenigstens eines Gasbestandteils zum Verbraucher gelangt.

Nach der Erfindung wird hierzu eine Kompressoranlage mit einem Kompressor gemäß Anspruch 1 bereitgestellt, dessen Druckgasausgang mit einem Verbraucher verbunden ist und über eine Bypassleitung über einen Druckminderer mit einer Gasmesseinrichtung verbunden ist, welche Konzentrationen von Gasbestanteilen, wie O₂, CO, CO₂, NO₂, Feuchte (H₂O), VOC, erfasst, und welche sich dadurch auszeichnet, dass parallel zur Bypassleitung ein magnetisch betätigbares Spülventil angeordnet ist, welches über eine Steuerleitung mit der Gasmesseinrichtung derart verbunden ist, dass es automatisch öffnet und das Druckgas ausleitet, wenn die Gasmesseinrichtung eine unzulässige Konzentration wenigstens eines erfassten Gasbestandteils feststellt.

Bei der erfindungsgemäßen Auslegung der Kompressoranlage wird somit automatisch mittels des magnetisch betätigbaren Spülventils das Druckgas ausgeleitet oder zur Umgebung abgelassen, wenn die Gasmesseinrichtung eine Konzentration wenigstens eines erfassten Gasbestandteils feststellt, die außerhalb des jeweils zulässigen Bereiches liegt. Somit kann zuverlässig über das Spülventil verhindert werden, dass Druckgas auch in unzulässiger Konzentration von wenigstens einem erfassten Gasbestandteil zum Verbraucher gelangen kann, bei dem es sich um einen Speicher, eine Füllstation oder dgl. handeln kann.

Diese Druckgase am Druckgasausgang des Kompressors, welche wenigstens einen Gasbestandteil enthalten, dessen Konzentration außerhalb des zulässigen Bereiches liegt, können Dank der erfindungsgemäßen Lösung zuverlässig zur Umgebung abgeleitet werden. Beim üblichen Kompressor-Anlagenbetrieb wird der Kompressor abgeschaltet, wenn ein vorbestimmter Zeitraum verstrichen ist und wenigsten einer der gemessenen Gasbestandteile noch außerhalb des zulässigen Bereiches liegt.

Erfindungsgemäß ist die Auslegung der Kompressoranlage derart gewählt, dass das Spülventil über die Steuerleitung mit der Gasmesseinrichtung derart verbunden ist, dass es automatisch schließt, wenn die Gasmesseinrichtung eine zulässige Konzentration für alle der erfassten Gasbestanteile feststellt. Bei dieser Auslegung kann der Kompressor der Kompressoranlage mit möglichst wenig Zeitverzögerung wieder den Verbraucher bedienen, wenn das Druckgas wieder die geforderten Konzentrationen der erfassten Gasbestandteile hat. Somit kann eine automatische Rücksetzung und Schließung des Spülventils erreicht werden.

Vorzugsweise handelt es sich bei dem Spülventil um ein Hochdruckmagnetventil, so dass das unter Hochdruck stehende Druckgas am Ausgang des Kompressors direkt zur Umgebung hin abgegeben werden kann.

Um Geräusche bei diesem Abgeben des Hochdruckgases von dem Spülventil zur Umgebung möglichst weitgehend zu dämmen, ist dem Hochdruckmagnetventil vorzugsweise ein Schalldämpfer nachgeschaltet.

Bei einer bevorzugten Ausführungsform sind die Gasmesseinrichtung und das Spülventil ggfs. mit dem Schalldämpfer in die Kompressoranlage integriert.

Gemäß einer alternativen Ausgestaltungsform sind die Gasmesseinrichtung und das Spülventil ggfs. mit dem Schalldämpfer als selbständige, unabhängige Einrichtung ausgelegt.

Insbesondere können bei der Kompressoranlage die Gasmesseinrichtung und das Spülventil ggfs. mit dem Schalldämpfer als mobile Einrichtung ausgelegt sein.

Insbesondere ist das vom Kompressor gelieferte Druckgas Druckluft, die beispielsweise für Atemluft bestimmt sein kann. Auch kann das gelieferte Druckgas ein Atemgasgemisch aus Stickstoff und Sauerstoff mit höherem Sauerstoffgehalt als normale Luft sein, wobei der Sauerstoffgehalt größer als 21% beträgt. Ein solches Atemgasgemisch wird auch als NITROX bezeichnet und insbesondere beim Tauchen eingesetzt. Alternativ kann das Druckgas NO₂, NO, SO₂ oder dgl. sein.

Zusammenfassend ist es bei der Erfindung wesentlich, dass dann, wenn die Gasmesseinrichtung eine unzulässige Konzentration wenigstens eines erfassten Gasbestandteils feststellt, die Gasmesseinrichtung über eine Steuerleitung ein magnetisch betätigbares Spülventil automatisch öffnet und das Druckgas ausleitet, um wirksam zu verhindern, dass Druckgas mit unzulässigen Konzentrationen von erfassten Gasbestanteilen zum Verbraucher gelangen kann. Durch die unmittelbare Betätigung des Spülventils über eine Steuerleitung von der Gasmesseinrichtung ist die Auslösung des Spülventils sehr zeitnah zu verwirklichen.

Die Erfindung wird nachstehend anhand einer bevorzugten Ausführungsform und als nicht beschränkendes Ausführungsbeispiel unter Bezugnahme auf die beigefügte Zeichnung näher erläutert.

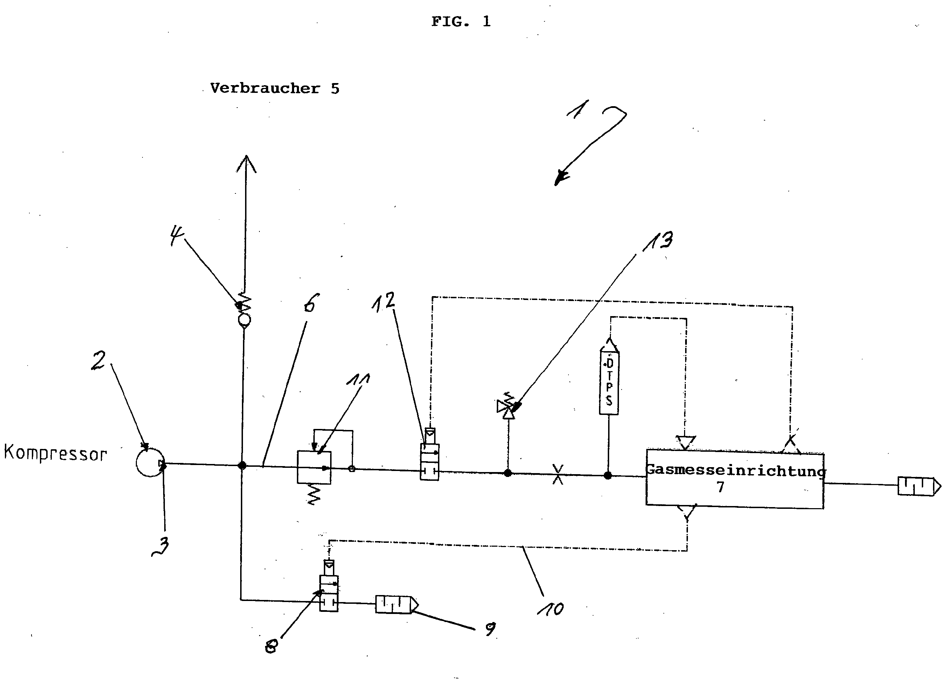

Die einzige Figur 1 zeigt einen schematischen Leitungsplan einer bevorzugten Ausführungsform einer Kompressoranlage.

In der Figur 1 der Zeichnung ist die Kompressoranlage insgesamt mit 1 bezeichnet. Die Kompressoranlage 1 weist einen Kompressor 2 auf, bei dem es sich um einen einstufigen oder mehrstufigen Kompressor, insbesondere einen Hochdruckkompressor, handeln kann.

Ein Druckgasausgang 3 des Kompressors 2 ist über ein Rückschlagventil 4 mit einem Verbraucher 5, wie einem Speicher, einer Füllstation oder dgl. verbunden. Ferner ist der Druckgasausgang 3 über eine insgesamt mit 6 bezeichnete Bypassleitung mit einer Gasmesseinrichtung 7 verbunden. In der Bypassleitung 6 sind ein Druckminderer 11, ein Magnetventil 12, ein Sicherheitsventil 13 und ein Druck-Taupunktsensor DTPS angeordnet. Parallel zu der Bypassleitung 6 ist der Druckgasausgang 3 mit einem Spülventil 8 verbunden, dem ggfs. ein Schalldämpfer 9 nachgeschaltet werden kann.

Bei diesem Spülventil 8 handelt es sich insbesondere um ein Hochdruckmagnetventil. Dieses magnetisch betätigbare Spülventil 8 ist über eine Steuerleitung 10 mit einem Ausgang der Gasmesseinrichtung 7 verbunden.

Ein Teil des Druckgases am Druckgasausgang 3 wird über die Bypassleitung 6 mit den jeweiligen Sensoren der Gasmesseinrichtung 7 geleitet, wobei die Gasmesseinrichtung 7 eine Konzentration von Gasbestandteilen wie O₂, CO, CO₂, NO₂, Feuchte (H₂O), VOC, erfasst.

Wenn wenigstens einer dieser erfassten Konzentrationswerte von dem zulässigen Konzentrationsbereich abweicht, steuert die Gasmesseinrichtung 7 über die Steuerleitung 10 automatisch und direkt das Spülventil 8 derart an, dass es geöffnet wird und das Druckgas am Druckgasausgang 3, welches wenigstens einen Bestandteil mit einer unzulässigen Konzentration enthält, über das Spülventil 8 und den nachgeschalteten Schalldämpfer 9 zur Umgebung hin abgelassen wird. Sobald die Gasmesseinrichtung 7 erkennt, dass die Konzentrationen aller gemessenen Gasbestandteile in den zulässigen Bereichen liegen, wird automatisch über die Gasmesseinrichtung 7 das Spülventil 8 wieder geschlossen und das Druckgas am Druckgasausgang 3 des Kompressors 2 wird dann wiederum dem Verbraucher 5 zugeleitet.

Dank des erfindungsgemäß vorgesehenen Spülventils 8 kann somit automatisch und zuverlässig sowie direkt vermieden werden, dass Druckgas mit einer unzulässigen Konzentration von wenigstens einem der erfassten Gasbestandteile zum Verbraucher 5 gelangen kann. Ohne manuellen Eingriff kann dann das Spülventil 8 aber auch wieder geschlossen werden, wenn die Gasmesseinrichtung 7 bei den erfassten Gasbestandteilen feststellt, dass diese wieder innerhalb der zulässigen Bereiche liegen.

Die Funktionen und Betätigungen des Spülventils 8 können bei der erfindungsgemäßen Kompressoranlage 1 in entsprechend geeigneter Weise aufgezeichnet und dokumentiert werden. Hierdurch wird insbesondere den bei derartigen Kompressoranlagen 1 geltenden Sicherheitsbestimmungen Rechnung getragen.

## Patentansprüche

1. Kompressoranlage (1) mit einem Kompressor (2), dessen Druckgasausgang (3) mit einem Verbraucher (5) verbunden ist und über eine Bypassleitung (6) über einen Druckminderer (11) mit einer Gasmesseinrichtung (7) verbunden ist, welche Konzentrationen von Gasbestandteilen, wie O₂, CO, CO₂, NO₂, Feuchte (H₂O), VOC, erfasst, **dadurch gekennzeichnet, dass** parallel zur Bypassleitung (6) ein magnetisch betätigbares Spülventil (8) angeordnet ist, welches über eine Steuerleitung (10) mit der Gasmesseinrichtung (7) derart verbunden ist, dass es automatisch öffnet und das Druckgas ausleitet, wenn die Gasmesseinrichtung (7) eine unzulässige Konzentration wenigstens eines erfassten Gasbestandteils feststellt, und dass es automatisch schließt, wenn die Gassmesseinrichtung (7) eine zulässige Konzentration für alle Gasbestandteile feststellt.

2. Kompressoranlage nach Anspruch 1, **dadurch gekennzeichnet, dass** das Spülventil (8) ein Hochdruckmagnetventil ist.

3. Kompressoranlage nach Anspruch 2, **dadurch gekennzeichnet, dass** dem Hochdruckmagnetventil (8) ein Schalldämpfer (9) nachgeschaltet ist.

4. Kompressoranlage nach einem der Ansprüche 1 bis 3, **dadurch gekennzeichnet, dass** die Gasmesseinrichtung (7) und das Spülventil (8) ggfs. mit dem Schalldämpfer (9) in die Kompressoranlage (1) integriert sind.

5. Kompressoranlage nach einem der Ansprüche 1 bis 3, **dadurch gekennzeichnet, dass** die Gasmesseinrichtung (7) und das Spülventil (8) ggfs. mit einem Schalldämpfer (9) als selbständige, unabhängige Einrichtung ausgelegt sind.

6. Kompressoranlage nach einem der Ansprüche 1 bis 4 oder 5, **dadurch gekennzeichnet, dass** die Gasmesseinrichtung (7) und das Spülventil (8) ggfs. mit dem Schalldämpfer als mobile Einrichtung ausgelegt sind.

7. Kompressoranlage nach einem der vorangehenden Ansprüche, **dadurch gekennzeichnet, dass** das Druckgas Druckluft ist.

8. Kompressoranlage nach einem der Ansprüche 1 bis 6, **dadurch gekennzeichnet, dass** das Druckgas ein Atemgasgemisch (NITROX) ist, das Stickstoff und Sauerstoff mit höherem Sauerstoffgehalt als normale Luft ist.

9. Kompressoranlage nach einem der Ansprüche 1 bis 6, **dadurch gekennzeichnet, dass** das Druckgas NO2, NO oder SO2 ist.

## Claims

1. A compressor unit (1) with a compressor (2), the compressed air outlet (3) of which is connected to an appliance (5) and connected to a gas-measuring device (7), via a bypass line (6), via a pressure regulator (11) which records concentrations of gas constituents such as O₂, CO, CO₂, NO₂, humidity (H₂O), VOC, **characterised in that** a magnetically operable purge valve (8) is arranged parallel to the bypass line (6), which valve is connected to the gas-measuring device (7) via a control line (10) such that it opens automatically and diverts the compressed gas when the gas-measuring device (7) detects an impermissible concentration at least of one detected gas constituent, and that it closes automatically when the gas-measuring device (7) detects a permissible concentration for all gas constituents.

2. The compressor unit according to claim 1, **characterised in that** the purge valve (8) is a high pressure solenoid valve.

3. The compressor unit according to claim 2, **characterised in that** a sound absorber (9) is connected downstream of the high pressure solenoid valve (8).

4. The compressor unit according to one of claims 1 to 3, **characterised in that** the gas-measuring device (7) and the purge valve (8) are optionally integrated with the sound absorber (9) in the compressor unit (1).

5. The compressor unit according to one of claims 1 to 3, **characterised in that** the gas-measuring device (7) and the purge valve (8) are optionally configured with a sound absorber (9) as a standalone, independent device.

6. The compressor unit according to one of claims 1 to 4 or 5, **characterised in that** the gas-measuring device (7) and the purge valve (8) are optionally configured with the sound absorber as mobile device.

7. The compressor unit according to one of the preceding claims, **characterised in that** the compressed gas is compressed air.

8. The compressor unit according to one of claims 1 to 6, **characterised in that** the compressed gas is a breathing gas mix (NITROX), which is nitrogen and oxygen with a higher oxygen content than normal air.

9. The compressor unit according to one of claims 1 to 6, **characterised in that** the compressed gas is NO₂, NO or SO₂.

## Revendications

1. Installation de compresseur (1) avec un compresseur (2), dont la sortie de gaz sous pression (3) est reliée à un consommateur (5) et qui est reliée via une conduite de dérivation (6) par un réducteur de pression (11) à un dispositif de mesure de gaz (7) qui mesure des concentrations de composants gazeux, tels que O₂, CO, CO₂, NO₂, l'humidité (H₂O), les composés organiques volatiles COV, **caractérisé en ce qu'**une valve de lavage (8) actionnable magnétiquement est agencée en parallèle avec la conduite de dérivation (6), valve de lavage qui est reliée, via une conduite pilote (10), au dispositif de mesure de gaz (7) de telle sorte qu'elle s'ouvre automatiquement et évacue le gaz comprimé lorsque le dispositif de mesure de gaz (7) constate une concentration illicite d'au moins un composant gazeux mesuré et qu'elle se referme automatiquement lorsque le dispositif de mesure de gaz (7) constate une concentration autorisée pour tous les composants gazeux.

2. Installation de compresseur suivant la revendication 1, **caractérisée en ce que** la valve de lavage (8) est une électrovanne haute pression.

3. Installation de compresseur suivant la revendication 2, **caractérisée en ce qu'**un amortisseur de bruit (9) est disposé en aval de l'électrovanne haute pression (8).

4. Installation de compresseur suivant une des revendications 1 à 3, **caractérisée en ce que** le dispositif de mesure de gaz (7) et la valve de lavage (8) sont, le cas échéant, intégrés avec l'amortisseur de bruit (9) dans l'installation de compresseur (1).

5. Installation de compresseur suivant une des revendications 1 à 3, **caractérisée en ce que** le dispositif de mesure de gaz (7) et la valve de lavage (8) sont agencés, le cas échéant, avec un amortisseur de bruit (9) comme dispositif indépendant et autonome.

6. Installation de compresseur suivant une des revendications 1 à 4 ou 5, **caractérisée en ce que** le dispositif de mesure de gaz (7) et la valve de lavage (8) sont agencés, le cas échéant avec l'amortisseur de bruit, comme un dispositif mobile

7. Installation de compresseur suivant une des revendications précédentes, **caractérisée en ce que** le gaz comprimé est de l'air comprimé.

8. Installation de compresseur suivant une des revendications 1 à 6, **caractérisé en ce que** le gaz comprimé est un mélange respiratoire (NITROX) à base d'azote et d'oxygène avec une teneur plus élevée en oxygène que l'air normal.

9. Installation de compresseur suivant une des revendications 1 à 6, **caractérisée en ce que** le gaz comprimé est NO₂, NO ou SO₂.
